# EUROPÄISCHE PATENTSCHRIFT

(11) **EP 2 900 068 B1**
(45) Veröffentlichungstag und Bekanntmachung des Hinweises auf die Patenterteilung: **04.03.2020**
(21) Anmeldenummer: 13765358.0
(22) Anmeldetag: 19.09.2013
(51) Int. Cl.: A01N 59/02, C02F 5/08, C02F 5/10, A01N 39/00, A01P 1/00

(54) **DESINFEKTIONSREINIGER FÜR TRINKWASSERVERSORGUNGSANLAGEN UND SEINE VERWENDUNGEN**
DESINFECTING CLEANER FOR POTABLE WATER SUPPLY APPLIANCES AND ITS USES
NETTOYANT DESINFECTANT POUR DISPOSITIF D'ALIMENTATION EN EAU POTABLE ET SES UTILISATIONS

(30) Priorität: 26.09.2012 DE 102012109099
(43) Veröffentlichungstag der Anmeldung: 05.08.2015
(73) Patentinhaber: Carela GmbH, 79618 Rheinfelden (DE)
(72) Erfinder: REISGYS, Michael, CH-4132 Muttenz (CH); BRODBECK, Edith, 79618 Rheinfelden (DE); KRUMREY, Bernd, 79591 Eimeldingen (DE); ERDINGER, Lothar, 68519 Viernheim (DE); FERNÁNDEZ ALBA, Sonja, 46010 Valencia (ES)
(74) Vertreter: Friese Goeden Patentanwälte PartGmbB
(86) Internationale Anmeldenummer: PCT/EP2013/069443
(87) Internationale Veröffentlichungsnummer: WO 2014/048823

(56) Entgegenhaltungen:
- EP-A1- 1 621 521
- US-A1- 2004 029 758

## Beschreibung

Die vorliegende Erfindung betrifft das Gebiet der Reinigung und Wartung von Einrichtungen für die Speicherung und Bevorratung sowie für den Transport von Wasser, insbesondere von Wasser von Trinkwasserqualität. In einem engeren Sinne betrifft dabei die Erfindung Mittel, die als einen für die erfolgreiche Reinigung von Einrichtungen der genannten Art wesentlichen Bestandteil Dithionitsalze enthalten, sowie deren fachmännischen Einsatz.

Es ist bekannt, dass Einrichtungen für die Speicherung und Bevorratung sowie für den Transport von Wasser (Wasserversorgungseinrichtungen) regelmäßig gereinigt und anderweitig gewartet werden müssen, da sich an den mit dem Wasser in Kontakt stehenden Oberflächen derartiger Einrichtungen und an den zugeordneten Gerätschaften und technischen Zusatzeinrichtungen, vor allen an den Wänden der Behälter, von Rohrleitungen und auf bzw. in zugeordneten technischen Armaturen, feste Ablagerungen bilden, so dass die Einrichtungen überwacht und nach den erforderlichen Zeiträumen regelmäßig gereinigt werden müssen. Die chemische Zusammensetzung der Beläge und die Geschwindigkeit ihrer Bildung hängen dabei im Einzelfall von verschiedenen Faktoren ab, zu denen die Qualität des jeweiligen Wassers, insbesondere die Art der mineralischen und mikrobiologischen Bestandteile des Wassers gehört. Außerdem haben die Temperaturbedingungen bei der Speicherung des Wassers sowie der Zutritt von Luft, insbesondere Umgebungsluft, und Licht zu dem in den Einrichtungen gespeicherten Wasser einen erheblichen Einfluss auf die Art der sich bildenden und durch Reinigung zu entfernenden Beläge sowie auf die Geschwindigkeit ihrer Neubildung.

In Belägen der genannten Art finden sich häufig carbonatische und/oder oxidische Metallverbindungen, z.B. Eisen- und Manganverbindungen, die meist auch noch als Einschlüsse und/oder oberflächliche Filme mikrobielle Bestandteile enthalten.

Es ist bekannt, dass zur Auflösung derartiger Beläge eine Behandlung mit geeigneten chemischen Mitteln erforderlich ist. Zu den erfolgreich eingesetzten Mitteln gehören z.B. Mischungen aus Mineralsäuren, vor allem Salzsäure, und Wasserstoffperoxid (vergleiche das Verfahren gemäß EP 0 113 060 B1). Derartige stark sauren Mittel können aber nur dann eingesetzt werden, wenn das Wandmaterial ausreichend säurefest ist.

Ferner ist es bekannt, dass sich Beläge der genannten Art unter Schonung der behandelten Einrichtungen auch in einem neutralen pH-Bereich sehr gut auflösen lassen, wenn man Mittel einsetzt, die als einen wesentlichen Wirkbestandteil Dithionitsalze, insbesondere Natriumdithionit, enthalten. Um derartige Mittel in der Praxis erfolgreich einsetzen zu können, war eines der zu überwindenden Hauptprobleme weniger der Reinigungserfolg an sich, als die Bereitstellung von Mitteln, die unter Praxisbedingungen gut handhabbar sind und gut gelagert werden können, da Natriumdithionit eine in der Handhabung nicht unproblematische Substanz ist, die sich bei Zutritt von Feuchtigkeit leicht zersetzt, dabei erwärmt und dabei und bei ihrem nicht sachgerechten Einsatz reizende und übelriechende Gase freisetzen kann. Mittel, die eine praktische Nutzung von Dithionit zur Entfernung von Belägen aus Wasserversorgungseinrichtungen erst ermöglichten und in der Praxis erfolgreich waren und sind, sind beschrieben in den Patenten EP 1 150 923 B1 und EP 1 300 368 B1 sowie insbesondere im Patent EP 1 621 521 B1 der Anmelderin. Zur Ergänzung der zusammenfassenden Ausführungen in der vorliegenden Anmeldung wird ausdrücklich auf die detaillierteren Erläuterungen in der Einleitung des Patents EP 1 621 521 B1 verwiesen.

Dabei gilt, dass wenn im Rahmen der vorliegenden Anmeldung von "dithionithaltigen Mitteln" die Rede ist, von diesem Begriff bevorzugt auch Mittel umfasst werden, wie sie in den Beispielen und Ansprüchen des Patents EP 1 621 521 B1 beschrieben und mengenmäßig genauer charakterisiert sind.

Damit Trinkwasser, das zu den Lebensmitteln zu zählen ist, mikrobiologisch einwandfrei hergestellt, gespeichert, transportiert und verteilt werden kann, ist es jedoch notwendig, Trinkwasseranlagen nicht nur von Belägen zu reinigen, sondern nach Neubau, Umbau, Reparatur, Kontrollgängen und längeren Betriebsphasen auch wirksam zu desinfizieren.

Angestrebt wird dabei, dass die Desinfektion in einem Arbeitsgang mit der Reinigung mit chemischen Reinigungs- und Desinfektionsmitteln, insbesondere mit sogenannten Desinfektionsreinigern, durchgeführt werden kann. Dadurch werden Aufwand, Arbeitszeit und somit Kosten gespart.

Die bekannten dithionithaltigen Mittel weisen neben ihren belagauflösenden Eigenschaften auch eine gewisse desinfizierende Wirkung auf, die man damit in Zusammenhang bringen kann, dass bei der Einwirkung der Mittel auf die aufzulösenden Beläge u.a. Sulfite entstehen, die desinfizierend wirken.

Es hat sich jedoch gezeigt, dass die dithionithaltigen Mitteln inhärente desinfizierende Wirkung für anspruchsvollere Anwendungen in der Regel noch nicht ausreichend ist, da bezüglich der Desinfektionen die Normen DIN EN 1276 (bakterizide Wirkung) und DIN EN 1650 (fungizide Wirkung) nicht zuverlässig erfüllt werden.

Es ist daher Aufgabe der vorliegenden Erfindung, dithionithaltige Mittel der eingangs geschilderten Art so zu verbessern, dass sie eine verbesserte desinfizierende Wirkung aufweisen, so dass sie auch für Desinfektionsreinigungen verwendet werden können, für die die existierenden Mittel nicht zuverlässig einsetzbar sind.

Diese Aufgabe wird durch die Verwendungen, Mittel und Verfahren gelöst, die in den Patentansprüchen genauer gekennzeichnet sind.

Bei der Schaffung der vorliegenden Erfindung war das Problem zu überwinden, dass die meisten bekannten und zugelassenen Stoffe mit desinfizierender mikrobizider Wirkung nicht mit dem starken Reduktionsmittel Dithionit kombiniert werden können, da sie mit diesem bzw. seinen wässrigen Lösungen reagieren, und/oder dass sie nicht die für eine Verwendung in wässrigen Behandlungslösungen erforderliche Wassermischbarkeit aufweisen und/oder sich nicht rückstandsfrei von den behandelten Oberflächen von Trinkwasserbehältern abspülen lassen.

Es war Ziel der vorliegenden Erfindung, ein Mittel zu schaffen, mit dem die Reinigung und Desinfektion von Wasserversorgungseinrichtungen gleichzeitig erfolgen kann, so dass eine mehrstufige Behandlung mit vorgeschalteter Reinigung und nachgeschalteter Desinfektion vermieden werden kann. Ein erfindungsgemäßes Mittel sollte die Anforderungen bezüglich der Desinfektion nach den Normen DIN EN 1276 (bakterizide Wirkung) und DIN EN 1650 (fungizide Wirkung) erfüllen. Weiterhin sollte das Mittel konform der Biozidrichtlinie 98/8/EG sein und nach abgeschlossener Belagentfernung und Spülung der behandelten Oberflächen mit Wasser keine unerwünschten Rückstände hinterlassen (Anforderungen nach Arbeitsblatt W 319 des DVGW).

Unter praktischen Gesichtspunkten sollte das Mittel ein Einkomponentenprodukt in Form eines festen pulverförmigen Konzentrats sein, das vor seinem Einsatz zur Herstellung einer Behandlungslösung in Trinkwasser ausreichend gelöst werden kann. Die nach der Auflösung in Wasser erhaltene anwendungsbereite Lösung sollte einen neutralen pH-Wert aufweisen und die in Trinkwasserbehältern vorkommenden Materialien wie z. B. Edelstahl, Kunststoffe, Farbanstriche usw. nicht angreifen.

Die erhaltene wässrige Reinigungslösung sollte ferner mit Geräten, z.B. Sprühgeräten, verarbeitbar sein, wie sie bereits gegenwärtig bei einschlägigen Behandlungen zu Einsatz kommen, z.B. mit Geräten des hauseigenen Geräteprogramms der Anmelderin. Die Lösung sollte darüber hinaus keinen auffälligen oder gar unangenehmen Geruch besitzen. Die Reinigungswirkung des Mittels gegenüber Fe- und Mn-haltigen Ablagerungen an Oberflächen von Trinkwasserbehältern sollte nicht geringer sein als gemäß dem Stand der Technik für pH-Wert neutrale Mittel (EP 1 621 521 B1).

Das Mittel sollte außerdem nicht stauben und eine Haltbarkeit von 1 Jahr besitzen.

Die Mittel der vorliegenden Erfindung erfüllen alle genannten Anforderungen in gewünschtem Umfange.

Es gelang den Erfindern, eine Substanz mit desinfizierender Wirkung zu finden, die sich mit dithionithaltigen Mitteln kombinieren lässt, in diesen Mitteln keinen Wirkungsverlust erleidet und den Mitteln eine desinfizierende Wirkung verleiht, die den gesetzten Anforderungen entspricht.

Es hat sich gezeigt, dass man zur Überwindung aller oben genannten Probleme auf desinfizierende Substanzen zurück greifen musste, die typischer Weise für andersartige Anwendungen eingesetzt werden, sich in erfindungsgemäßen Mitteln jedoch als überraschend wirksam erwiesen.

Die Substanz mit biozider Wirkung ist die Verbindung 2-Phenoxyethanol (n = 0; m = 2; CAS Nummer 122-99-6). Diese hat gegenüber anderen Gliedern der Aryloxyalkanole den Vorteil einer besseren Wirksamkeit und einer höheren Wassermischbarkeit ("Löslichkeit"), so dass bei ihrer Verwendung die Mengen an Lösungsvermittlern oder Emulgatoren in den Mitteln geringer gehalten werden können als bei anderen Substanzen der genannten Verbindungsklasse. Die bisherigen Haupt-Einsatzgebiete für die Verbindung 2-Phenoxy-ethanol sind das Gebiet der Kosmetik und der pharmazeutischen Produkte, d.h. Anwendungsgebiete, die so gut wie keine Berührungspunkte mit Desinfektionsreinigern für Wasserversorgungseinrichtungen, insbesondere Trinkwasserbehälter, gemäß der vorliegenden Erfindung aufweisen.

Nachfolgend werden die Erfindung und ihre Vorteile ausschließlich anhand der Verwendung von 2-Phenoxyethanol weiter erläutert. Es hat sich gezeigt, dass der Zusatz dieser Verbindung zu dithionithaltigen Mitteln für die Behandlung von Wasserversorgungseinrichtungen dazu führt, dass sich deren desinfizierende Wirkung entscheidend verbessert, ohne dass diese Verbesserung mit Nachteilen erkauft wird, die die existierenden dithionithaltigen Mittel des Standes der Technik nicht aufweisen.

Der moderne Stand der Technik für dithionithaltige Reinigungsmittel wird insbesondere durch das europäische Patent EP 1 621 521 B1 repräsentiert. Das dort beschriebene pH-Wert-neutrale feste Mittel auf der Basis von Natriumdithionit, kondensierten Polyphosphaten und pH-Wert stabilisierenden Substanzen hat sich in der Praxis für Reinigungszwecke als brauchbar erwiesen. Es ist ein pulverförmiges Konzentrat, das bei seiner Auflösung in Wasser eine pH-Wert-neutrale Reinigungslösung mit einer ausreichenden reinigenden Wirkung bezüglich der in Wasserbehältern häufigen Fe/Mn-Ablagerungen ergibt.

Das Mittel nach EP 1 621 521 A1 hat jedoch nur eine ungenügende abtötende Wirkung auf Mikroorganismen. Es erfüllt die Anforderungen nicht, welche für Desinfektionsmittel in den Normen EN 1276 und EN 1650 gestellt werden. Obwohl das Natriumdithionit während des Reinigungsprozesses unter Freisetzung von Natriumsulfit und Natriumhydrogensulfit reagiert, die beide biozide Wirkungen zeigen, reicht die antimikrobiologische Wirksamkeit beider Stoffe nicht aus, dass die obigen Normen erfüllt werden. Beide Reaktionsprodukte sind jedoch im Lebensmittelbereich als Konservierungsmittel zugelassen: Natriumsulfit unter der Nummer E 221 und Natriumhydrogensulfit unter der Nummer E 222. Sie werden z. B. zur Konservierung von Trockenfrüchten eingesetzt.

Da Trinkwasser zu den Lebensmitteln zu zählen ist, kommen für die Zwecke der vorliegenden Erfindung keine bioziden Wirkstoffe in Frage, die mit Lebensmitteln oder mit Oberflächen, die mit Lebensmitteln in Kontakt kommen, nicht in Kontakt kommen dürfen.

Um die Desinfektionswirkung von dithionithaltigen Mitteln zu verbessern, können die meisten bekannten desinfizierenden Substanzen in derartigen Mitteln nicht verwendet werden. Ein Zusatz von bekannten, in der Trinkwassertechnik bereits eingesetzten Desinfektionswirkstoffen zu einem Natriumdithionit enthaltenden Mittel führt zu keinem brauchbaren Produkt. Derartige Desinfektionswirkstoffe wie z. B. Chlor, Natrium- oder Calciumhypochlorit, Wasserstoffperoxid, Ozon oder Kaliumpermanganat sind alles starke Oxidationsmittel. Sie reagieren mit Natriumdithionit und werden so inaktiviert. Es entstehen dabei unerwünschte Zersetzungsprodukte.

Die üblicherweise zur Desinfektion von Oberflächen im Lebensmittelbereich verwendeten sauren Desinfektionswirkstoffe wie z. B. Ameisen-, Bromessig- oder Glycolsäure können aufgrund ihres niedrigen pH-Werts ebenfalls nicht einsetzt werden, denn Natriumdithionit reagiert mit Säuren zu giftigem Schwefeldioxid und/oder Schwefelwasserstoff.

Wirkstoffe aus den Substanzklassen der quaternären Ammoniumsalze, Diamine oder Biguanide haben eine zu geringe Löslichkeit in der anwendungsbereiten Reinigungslösung. Die erreichbare Konzentration des desinfizierenden Wirkstoffs ist zu klein, um eine ausreichende Keimtötung zu erzielen.

Weitere für Oberflächen im Lebensmittelbereich einsetzbare Desinfektionswirkstoffe wie z.B. Peressigsäure, Pentakalium-bis(peroxymonosulfat)bis(sulfat) oder die festen Chlorabspalter wie Natrium-N-chlor-4-toluolsulfonamid oder Natriumdichlorisocyanurat können aufgrund ihrer oxidierenden Eigenschaften nicht eingesetzt werden. Sie werden durch Redoxreaktionen mit Natriumdithionit zerstört.

Die erfindungsgemäße Aufgabenstellung wird durch den Zusatz von 2-Phenoxy-ethanol gelöst.

Der Desinfektionswirkstoff 2-Phenoxyethanol löst die erfindungsgemäße Aufgabenstellung auf besonders elegante Weise. Die Substanz ist pH-Wert neutral, reagiert nicht als Oxidationsmittel und wird so von Natriumdithionit nicht angegriffen. Sie ist nahezu wasserfrei erhältlich, was ein wichtiger praktischer Vorteil ist, denn Wasserspuren fördern die Zersetzung von Natriumdithionit und beeinträchtigen die Haltbarkeit des pulverförmigen Mittels. 2-Phenoxyethanol hat außerdem staubbindende Eigenschaften und verhindert dadurch, dass das feste Mittel beim Auflösen in Wasser zur Herstellung der anwendungsbereiten Reinigungs- und Desinfektionslösung unangenehm staubt. Weiterhin wirkt sich ein Zusatz von 2-Phenoxyethanol auch positiv auf den Geruch der anwendungsbereiten Lösung aus. Der bei unsachgemäßer Handhabung während des Anrührens teilweise kurzzeitig auftretende unangenehme "schwefelige" Geruch einer anwendungsbereiten Lösung nach dem Stand der Technik (EP 1 621 521 B1) wird signifikant zurückgedrängt.

In den erfindungsgemäßen festen Mitteln beträgt der Gehalt an 2-Phenoxyethanol mehr als 0,1 Gew.-%, wobei der Gehalt bis auf etwa 5 Gew.-% erhöht werden kann. Ein beispielsweiser, praktisch bervorzugter Gehalt ist 3,6 Gew.-%.

Es hat sich weiterhin gezeigt, dass ein Zusatz von waschaktiven Substanzen, insbesondere von ionogenen und nichtionogenen Detergenzien und Lösevermittlern, insbesondere von anionischen Detergenzien und Lösevermittlern, dabei wiederum bevorzugt von Alkylarylsulfonaten, insbesondere von Alkylbenzolsulfonaten und derzeit bevorzugt von Natriumcumolsulfonat, zum Mittel der vorliegenden Erfindung vorteilhaft ist. Nach dem Auflösen des Mittels in Wasser entstehen homogenere und wirksamere Reinigungs-/Desinfektionslösungen, ohne dass sich auf deren Oberflächen Flecken in der Art von Ölfilmen zeigen.

In den erfindungsgemäßen festen Mitteln beträgt der Gehalt an waschaktiven Substanzen, in Abhängigkeit vom Gehalt an 2-Phenoxyethanol, mehr als etwa 1 Gew.-%, wobei der Gehalt bis auf etwa 7 Gew.-% erhöht werden kann. Ein beispielsweiser, praktisch bervorzugter Gehalt ist etwa 4,4 Gew.-%.

Zusätzlich können gewünschtenfalls auch noch geringere Mengen an Hilfsstoffen und Duftstoffen vorhanden sein.

Die Desinfektionswirkung eines erfindungsgemäßen Mittels in Form einer Grundzusammensetzung gemäß EP 1 621 521 B1 mit einem Gehalt von etwa 3,6 Gew.-% 2-Phenoxyethanol wurde nach den Vorschriften der Norm DIN EN 1276 "Chemische Desinfektionsmittel und Antiseptika - Quantitativer Suspensionsversuch zur Bestimmung der bakteriziden Wirkung chemischer Desinfektionsmittel und Antiseptika in den Bereichen Lebensmittel, Industrie, Haushalt und öffentliche Einrichtungen - Prüfverfahren und Anforderungen (Phase 2, Stufe 1)" anhand der dort genannten Bakterien Pseudomonas aeruginosa, Escherichia coli, Staphylococcus aureus und Enterococcus hirae untersucht.

Eine ausreichende bakterizide Wirkung einer anwendungsbereiten Lösung des erfindungsgemäßen Mittels wird bereits nach 2 Minuten Einwirkzeit erzielt.

Nach den Vorschriften der Norm DIN EN 1650 "Chemische Desinfektionsmittel und Antiseptika - Quantitativer Suspensionsversuch zur Bestimmung der fungiziden Wirkung chemischer Desinfektionsmittel und Antiseptika in den Bereichen Lebensmittel, Industrie, Haushalt und öffentliche Einrichtungen - Prüfverfahren und Anforderungen (Phase 2, Stufe 1)" wurde außerdem für den dort genannten Hefepilz Candida albicans eine ausreichende fungizide Wirkung einer anwendungsbereiten Lösung des erfindungsgemäßen Mittels nach 15 Minuten Einwirkzeit ermittelt.

Die anwendungsbereite Lösung des erfindungsgemäßen Mittels hat in der Praxis bei der üblichen Vorgehensweise eine Einwirkzeit von mindestens 20 Minuten oder länger. Eine ausreichende Keimtötung ist somit gewährleistet.

Aufgrund seiner guten Desinfektionswirkung kann ein erfindungsgemäßer Desinfektionsreiniger auch für neue Anwendungszwecke eingesetzt werden, bei denen die Entfernung von dickeren eisen- und/oder manganhaltigen Belägen nicht im Vordergrund steht, sondern bei denen die zu entfernenden Beläge primär den Charakter von Biofilmen von verschiedenen in Wasser vorkommenden Mikroorganismen aufweisen und der Zweck des Einsatzes in erster Linie in einer gründlichen Desinfektion liegt.

Derartige Beläge entstehen beispielsweise in mobilen Anlagen zur Trinkwasserversorgung und Brauchwasserversorgung, z.B. zur Versorgung mit Brauchwasser für die Körperpflege und hygienische Zwecke, wie sie auf Baustellen und in Kriegs- und Katastrophengebieten eingesetzt werden. Diese Anlagen sind häufig modular aufgebaut und weisen Wasserbehälter aus Edelstahl oder Kunststoffen auf. Häufig werden diese mobilen Anlagen unter verschärften Einsatzbedingungen eingesetzt, d.h. unter schwierigen klimatischen Bedingungen und in einer unsauberen Umgebung, wodurch die Belagentstehung gefördert wird und eine häufigere sorgfältige Reinigung und Desinfizierung erforderlich werden kann.

Beläge mit dem Charakter von Biofilmen entstehen in solchen Anlagen bereits nach wenigen Tagen, ohne dass in Proben des Wassers bereits Keime nachweisbar sein müssen, da in Wasserproben nur "freie" Keime, d.h. Keime, die sich aus dem Biofilm heraus gelöst haben, erfasst werden. Ferner existieren in Wasservorräten auch filmbildende Bakterien des Bakterienstatus "viable but not culturable" (VBNC). Diese können in Wasserproben nach den üblichen Bestimmungstechniken ebenfalls nicht erkannt werden, da sie auf den üblichen Nährböden nicht gezüchtet werden können.

Es kann somit sein, dass in Trinkwasserbehältern auch dann unerwünschte Mikroorganismen, z.B. verschiedene Bakterien, in Form von Biofilmen vorhanden sind, wenn die Wasserqualität bei einer Bestimmung anhand von Wasserproben noch gut zu sein scheint. Aus diesen Biofilmen heraus können sich die Mirkoorganismen im VBNC-Status jedoch herauslösen und ausbreiten, wobei sie neue Oberflächen besiedeln. Um Trinkwasserbehälter wirksam keimfrei zu machen, müssen sie nicht nur häufiger als scheinbar nötig gereinigt und desinfiziert werden, sondern es müssen auch Desinfektionsmethoden angewandt werden, die dazu führen, dass die Reste der Biofilme zuverlässig aus dem System entfernt werden. Erprobungen in der Praxis haben gezeigt, dass sich erfindungsgemäße Desinfektionsreiniger für solche Anwendungszwecke hervorragend eignen, da bei diesen ein Ausspülen nach abgeschlossener Belagentfernung und Desinfektion zur üblichen Vorgehensweise gehört.

## Patentansprüche

1. Verwendung von 2-Phenoxyethanol als desinfizierender Zusatz zu dithionithaltigen Desinfektionsreinigern für die Reinigung und Desinfektion von Einrichtungen für die Speicherung und Bevorratung sowie für den Transport von Wasser, insbesondere von Wasser von Trinkwasserqualität.

2. Mittel für die Entfernung von Belägen, die an den mit Wasser in Kontakt kommenden Oberflächen von Trinkwasserversorgungseinrichtungen und Trinkwasserbehältern gebildet wurden, und für die gleichzeitige Desinfektion dieser Oberflächen, wobei das Mittel die Form einer Feststoff-Zusammensetzung aufweist, die wenigstens ein Alkalidithionit in einer Menge von >10 Gew.-%, einen Komplexbildner in einer Menge von >15 Gew.-% und eine den pH-Wert puffernde Substanz in einer Menge von > 3 Gew.-% zur Einstellung eines pH-Werts im Bereich von 4,5 bis 8,5 enthält, **dadurch gekennzeichnet, dass** die Zusammensetzung zusätzlich 2-Phenoxyethanol in einer Menge von > 0,1 Gew.-% und eine oder mehrere waschaktive Substanz(en) in einer Menge von
> 1 Gew.-% enthält.

3. Mittel nach Anspruch 2, wobei als waschaktive Substanz(en) ionogene und nichtionogene Detergenzien und Lösevermittler vorhanden sind.

4. Mittel nach Anspruch 2 oder 3, wobei die Zusammensetzung als waschaktive Substanz(en) eines oder mehrere Alkylarylsulfonate enthält.

5. Mittel nach Anspruch 4, wobei die Zusammensetzung eines oder mehrere Alkylbenzolsulfonate enthält.

6. Mittel nach Anspruch 5, wobei das Alkylbenzolsulfonat Natriumcumolsulfonat ist.

7. Verfahren zur Entfernung von Belägen, die an den mit Wasser in Kontakt kommenden Oberflächen von Trinkwasserversorgungseinrichtungen und Trinkwasserbehältern gebildet wurden, und zur gleichzeitigen Desinfektion dieser Oberflächen durch ihre Behandlung mit einer Behandlungslösung, die durch Auflösung eines Mittels nach einem der Ansprüche 2 bis 6 in Wasser erhalten wurde, bei dem man die wässrige Behandlungslösung auf die zu behandelnden Oberflächen aufsprüht, einwirken lässt und die behandelten Oberflächen nach der für die Belagablösung und Desinfektion erforderlichen Einwirkzeit mit Wasser nachspült.

8. Verfahren nach Anspruch 7, wobei die Oberflächen die trinkwasserberührten Wände und Böden von Trinkwasserbehältern, die trinkwasserberührten Rohrleitungsinnenseiten sowie die trinkwasserberührten Oberflächen von weiteren technischen Einrichtungen von Trinkwasseranlagen sind.

## Claims

1. Use of 2-phenoxyethanol as a disinfectant addition to dithionite-containing disinfectant cleaners for cleaning and disinfecting appliances for the storage and stockage and also for the transport of water, especially of water of drinking-water grade.

2. Agent for removing deposits formed on the water-contact surfaces of drinking-water supply appliances and drinking-water containers and for simultaneously disinfecting these surfaces, the agent having the form of a solid composition which comprises at least one alkali metal dithionite in an amount of > 10% by weight, a complexing agent in an amount of > 15% by weight and a pH-buffering substance in an amount of > 3% by weight for establishing a pH in the range from 4.5 to 8.5, **characterized in that** the composition additionally comprises 2-phenoxyethanol in an amount of > 0.1% by weight and one or more detergent substances in an amount of > 1% by weight.

3. Agent according to Claim 2, the detergent substance(s) present being ionogenic and non-ionogenic detergents and solubilizers.

4. Agent according to Claim 2 or 3, the composition comprising, as detergent substance(s), one or more alkylarylsulfonates.

5. Agent according to Claim 4, the composition comprising one or more alkylbenzenesulfonates.

6. Agent according to Claim 5, the alkylbenzenesulfonate being sodium cumenesulfonate.

7. Method for removing deposits formed on the water-contact surfaces of drinking-water supply appliances and drinking-water containers and for simultaneously disinfecting these surfaces by treatment thereof with a treatment solution obtained by dissolving an agent according to any of Claims 2 to 6 in water, wherein the aqueous treatment solution is sprayed onto the surfaces to be treated and is left to act, and the treated surfaces, after the contact time needed for detachment of deposits and disinfection, are rinsed with water.

8. Method according to Claim 7, the surfaces being the drinking-water-contacted walls and bases of drinking-water containers, the drinking-water-contacted inner surfaces of pipework and also the drinking-water-contacted surfaces of other technical appliances of drinking-water systems.

## Revendications

1. Utilisation de 2-phénoxyéthanol comme additif désinfectant dans des nettoyants désinfectants contenant du dithionite pour le nettoyage et la désinfection d'installations de stockage et d'emmagasinage et pour le transport d'eau, en particulier d'eau de qualité d'eau potable.

2. Agent pour l'élimination des dépôts formés sur les surfaces des installations d'alimentation en eau potable et des réservoirs d'eau potable en contact avec de l'eau et pour la désinfection simultanée de ces surfaces, l'agent étant sous la forme d'une composition solide contenant au moins un dithionite alcalin en une quantité > 10 % en poids, un agent complexant en une quantité > 15 % en poids et une substance tampon de pH en une quantité > 3 % en poids pour ajuster un pH dans la plage de 4,5 à 8,5, **caractérisé en ce que**
la composition contient en outre du 2-phénoxyéthanol en une quantité > 0,1 % en poids et une ou plusieurs substance(s) active(s) détergente(s) en une quantité > 1 % en poids.

3. Agent selon la revendication 2,
dans lequel
des détergents et solubilisants ionogènes et non ionogènes sont présents en tant que substance(s) active(s) détergente(s).

4. Agent selon la revendication 2 ou 3,
dans lequel
la composition contient un ou plusieurs alkylarylsulfonates comme substance(s) active(s) détergente(s).

5. Agent selon la revendication 4,
dans lequel
la composition contient un ou plusieurs alkylbenzènesulfonates.

6. Agent selon la revendication 5,
dans lequel
l'alkylbenzènesulfonate est du cumène sulfonate de sodium.

7. Procédé pour l'élimination des dépôts formés sur les surfaces des installations d'alimentation en eau potable et des réservoirs d'eau potable en contact avec de l'eau et pour la désinfection simultanée de ces surfaces par leur traitement avec une solution de traitement obtenue par dissolution d'un agent selon l'une des revendications 2 à 6 dans de l'eau,
dans lequel
on pulvérise la solution de traitement aqueuse sur les surfaces à traiter, on la laisse agir et on rince à l'eau les surfaces traitées après le temps d'action requis pour l'élimination des dépôts et pour la désinfection.

8. Procédé selon la revendication 7,
dans lequel
les surfaces sont les parois et les fond de réservoirs d'eau potable en contact avec de l'eau potable, les faces intérieures de tuyauteries en contact avec de l'eau potable, ainsi que les surfaces en contact avec de l'eau potable d'autres dispositifs techniques d'installations d'eau potable.
